# FASCICULE DE BREVET EUROPEEN

(11) **EP 0 622 010 B1**
(45) Date de publication et mention de la délivrance du brevet: **25.03.1998**
(21) Numéro de dépôt: 94440025.8
(22) Date de dépôt: 12.04.1994
(51) Int. Cl.: A01D 75/20, A01D 78/10

(54) **Machine agricole, notamment une andaineuse de fourrage**
Landwirtschaftliche Maschine, insbesondere ein Futterschwader
Agricultural machine, especially a fodder windrower

(30) Priorité: 28.04.1993 FR 9305210
(43) Date de publication de la demande: 02.11.1994
(73) Titulaire: KUHN S.A., F-67706 Saverne Cedex (FR)
(72) Inventeur: Aron, Jérôme, F-67330 Dossenheim sur Zinsel (FR)
(74) Mandataire: Andres, Jean-Claude

(56) Documents cités:
- EP-A- 0 300 937
- EP-A- 0 526 365
- EP-A- 0 558 430
- DE-C- 3 926 381
- DE-U- 9 013 056
- DE-U- 9 115 158
- FR-A- 2 355 440

## Description

La présente invention se rapporte à une machine agricole, notamment une andaineuse de fourrage, comportant une structure portant au moins une roue râteleuse qui est entraînée en rotation durant le travail autour d'un axe sensiblement vertical et un dispositif de protection qui entoure partiellement ou totalement ladite roue râteleuse, lequel dispositif de protection comporte au moins une partie latérale repliable à laquelle est relié un verrou servant à immobiliser la roue râteleuse durant le transport.

Sur une machine de ce genre, connue dans le brevet FR-2 355 440, le verrou est constitué par un étrier qui est solidaire d'un protecteur repliable et qui enclenche avec un bras de la roue râteleuse lors du repliage dudit protecteur. Ledit étrier ne vient en contact avec un bras de la roue râteleuse que lorsque le protecteur repliable a été déplacé vers le haut d'un angle supérieur à 90°. Il est par conséquent possible de déplacer ledit protecteur repliable même si la roue râteleuse n'est pas à l'arrêt. Cela est très dangereux pour l'opérateur et pour d'autres personnes ou des animaux qui peuvent se trouver dans le voisinage et qui peuvent ainsi entrer en collision avec les bras de la roue râteleuse.

Il est en sus prévu de rendre l'étrier déclenchable en vue d'éviter une détérioration des bras porte-outils ainsi que de l'étrier et de l'élément auquel il est fixé lorsque la roue râteleuse est mise en rotation alors que l'étrier et le protecteur repliable sont en position de transport. Par conséquent, la roue râteleuse peut tourner lorsque le protecteur est en position de transport et n'assure pas de protection

La présente invention a pour but de proposer une machine agricole, notamment une andaineuse de fourrage, qui ne possède pas les inconvénients précités. Elle doit notamment présenter une meilleure sécurité lors de la mise en position de transport.

A cet effet, selon l'invention la roue râteleuse comporte un arrêt qui bloque le verrou et la ou les parties latérales du dispositif de protection en position de travail tant qu'elle est entraînée en rotation.

Cet agencement rend impossible le repliage du dispositif de protection avant l'arrêt complet de la roue râteleuse. De ce fait, il n'y a aucun risque que l'opérateur ou une autre personne entre en collision avec la roue râteleuse en mouvement.

Avantageusement, ledit verrou empêche également la mise en rotation de la roue râteleuse à partir du moment où le dispositif de protection est en position de transport. Il n'y a donc pas de risque d'une mise en route accidentelle par exemple durant le déplacement pour se rendre au lieu de travail.

D'autres caractéristisques et avantages de l'invention ressortiront des revendications et de la description ci-après d'un exemple de réalisation non limitatif de l'invention, avec référence aux dessins annexés dans lesquels :
- La figure 1 représente une vue de dessus d'une machine selon l'invention en position de travail.
- La figure 2 représente une vue de détail du verrou dans la position de travail.
- La figure 3 représente une vue de détail du verrou dans la position de transport.

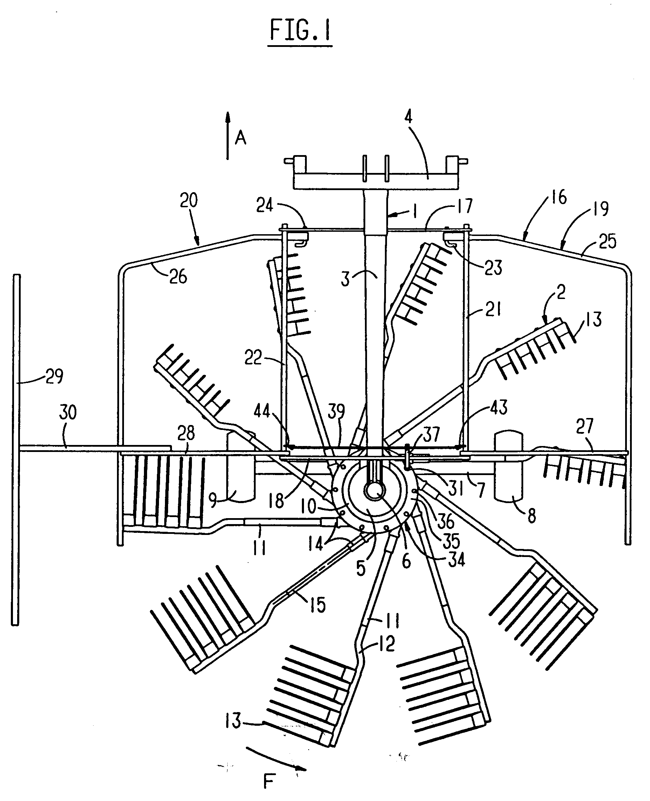

Telle qu'elle est représentée sur la figure 1, l'andaineuse selon l'invention comporte une structure (1) qui porte au moins une roue râteleuse (2). Ladite structure (1) est constituée par une poutre (3) qui est dirigée dans la direction d'avancement (A) et qui est munie à son extrémité la plus en avant d'un chevalet d'attelage trois points (4). Celui-ci permet l'accouplement de l'andaineuse à un tracteur d'entraînement non représenté. L'autre extrémité de cette poutre (3) porte un demi-carter (5) qui est ouvert vers le bas. Ce demi-carter (5) possède à peu près en son milieu, un orifice dans lequel est fixé un axe (6) qui est dirigé sensiblement verticalement vers le bas. L'extrémité inférieure de cet axe (6) porte un support transversal (7) avec deux roulettes (8, 9) qui peuvent prendre appui sur le sol.

La roue râteleuse (2) est montée sur l'axe (6) de manière à pouvoir tourner sur celui-ci. Elle se compose d'un boîtier rotatif (10) équipé de plusieurs bras (11) qui s'étendent vers l'extérieur et qui comportent des parties extérieures (12) démontables. Ils sont munis à leurs extrémités les plus éloignées du boîtier (10) de fourches de râtelage (13). Ces bras (11) sont montés dans des paliers (14) liés audit boîtier (10), de manière à pouvoir pivoter autour de leurs axes géométriques longitudinaux (15). Dans le volume intérieur du boîtier (10) se situe une came de commande qui est fixée sur l'axe (6). Chaque bras porte-fourches (11) possède à son extrémité située à l'intérieur du boîtier (10) un galet qui coopère avec ladite came de commande. A la face supérieure du boîtier (10) est fixée une couronne dentée qui engrène avec un pignon solidaire d'un arbre d'entraînement. Celui-ci peut être relié à un arbre de prise de force du tracteur au moyen d'arbres de transmission intermédiaires. La couronne dentée et le pignon pré-cités se situent sous le demi-carter (5) et sont protégés par celui-ci.

Le mode de réalisation de la roue râteleuse (2) peut être différent de celui décrit ci-dessus. Elle peut par exemple comporter des bras porte-fourches non commandés.

L'andaineuse comporte par ailleurs un dispositif de protection (16) qui entoure partiellement la roue râteleuse (2). Celui-ci empêche les personnes ou les animaux d'entrer dans la trajectoire des bras porte-fourches (11). Il évite aussi que la roue râteleuse (2) rencontre un obstacle qui pourrait l'endommager. Ce dispositif de protection (16) se compose de deux barres centrales (17 et 18) qui sont fixées sur la poutre (3) et de deux parties latérales (19 et 20). Celles-ci sont articulées sur les barres centrales (17 et 18) au moyen d'axes (21 et 22) qui sont dirigés dans la direction d'avancement (A). Ces axes (21 et 22) permettent de replier les parties latérales (19 et 20) d'une position horizontale pour le travail jusque dans une position verticale pour le transport. Elles peuvent être bloquées dans chacune de ces positions au moyen de verrous (23 et 24). Chacune de ces parties latérales (19 et 20) est formée par un tube coudé (25, 26) dont une des branches est solidaire de l'axe d'articulation (21, 22) correspondant et s'étend sensiblement dans le prolongement de la barre avant (17). La deuxième branche de chaque tube coudé (25, 26) est dirigée vers l'arrière et est reliée à l'axe d'articulation (21, 22) correspondant par une traverse (27, 28).

Dans l'exemple représenté sur la figure 1, le dispositif de protection (16) s'étend sur la moitié avant - vu dans la direction d'avancement (A) - et sur les côtés de la roue râteleuse (2). Vu qu'au travail l'andaineuse est déplacée dans la direction d'avancement (A) il n'y a pratiquement aucun risque qu'une personne ou un obstacle touche la roue râteleuse (2) sur le côté arrière. Il est néanmoins possible de prolonger les parties latérales (19 et 20) vers le côté arrière de la roue râteleuse (2) afin qu'elles assurent également une protection de ce côté.

Un déflecteur (29) est relié à la partie latérale (20) du dispositif de protection (16) au moyen d'une tige (30). Ce déflecteur (29) se situe latéralement à la roue râteleuse (2) de manière à limiter la projection latérale du fourrage déplacé. Il est constitué par une grille ou une toile renforcée de forme rectangulaire. Sa hauteur est à peu près égale à celle de la roue râteleuse (2) elle-même.

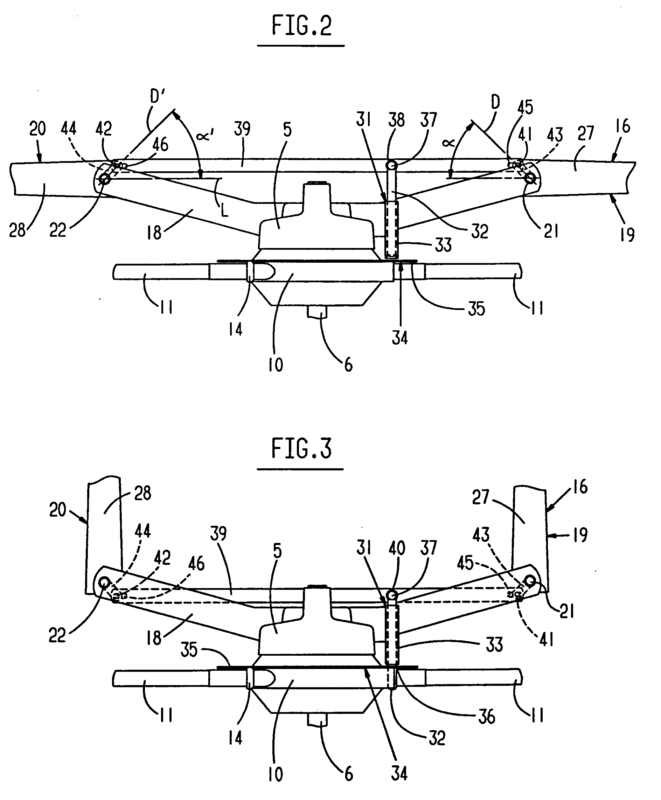

L'andaineuse comporte un verrou (31) servant à immobiliser la roue râteleuse (2). On voit sur les figures 2 et 3 que ce verrou (31) est constitué par une broche (32) sensiblement verticale. Il est logé de manière à pouvoir coulisser dans un tube (33). Celui-ci est solidaire de la barre centrale (18) du dispositif de protection (16) et se situe dans le voisinage du boîtier (10) de la roue râteleuse (2).

Cette dernière comporte un arrêt (34) qui bloque le verrou (31) et les parties latérales (19 et 20) du dispositif de protection (16) en position de travail tant qu'elle est entraînée en rotation. L'arrêt (34) est constitué par une couronne (35) qui est solidaire de la roue râteleuse (2). Cette couronne (35) est vissée sur la face supérieure du boîtier (10), de telle sorte qu'elle se situe sous le verrou (31). Elle comporte plusieurs orifices (36) dans lesquels peut pénétrer le verrou (31). Ces orifices (36) sont répartis sur toute la longueur de la couronne (35). Leur diamètre n'est que légèrement supérieur à celui de la broche (32) qui constitue le verrou (31).

Ladite broche (32) comporte à son extrémité supérieure une tige de manoeuvre (37) dirigée dans la direction d'avancement (A). Cette tige (37) passe dans un orifice (38) prévu dans une traverse (39) et est bloquée par rapport à celle-ci au moyen de goupilles (40). La traverse (39) s'étend entre les deux parties latérales (19 et 20) du dispositif de protection (16), transversalement à la direction d'avancement (A). Elle est fixée à ses deux extrémités sur des pivots (41 et 42) qui se situent sur des pattes (43 et 44) solidaires des axes d'articulation (21 et 22) des parties latérales (19 et 20). Pour cette fixation, la traverse (39) comporte à ses extrémités des orifices (45 et 46) oblongs dans la direction horizontale, dans lesquels pénètrent les pivots (41 et 42). Ceux-ci sont décalés par rapport auxdits axes d'articulation (21 et 22). Ils se situent sur des droites (D et D') qui sont dirigées obliquement vers le haut et vers le milieu de la machine lorsque les parties latérales (19 et 20) sont en position de travail (figure 2). Dans cette position, les droites (D et D') forment des angles (α et α') d'environ 45° avec une ligne horizontale (L) passant par les axes d'articulation (21 et 22).

Au travail, la machine est accouplée au moyen du chevalet d'attelage (4) au dispositif de relevage d'un tracteur permettant de la déplacer dans la direction d'avancement (A). La roue râteleuse (2) est alors entraînée en rotation dans le sens (F), autour de son axe support (6), à partir de l'arbre de prise de force du tracteur. Par suite de cette rotation, les galets situés aux extrémités intérieures des bras porte-fourches (11) se déplacent dans la came qui est logée dans le boîtier (10). Celle-ci commande alors lesdits bras (11), de telle sorte que les fourches (13) soient dirigées vers le sol dans la partie avant de leur trajectoire et qu'elles pivotent vers le haut dans la partie latérale dans laquelle elles se déplacent vers l'arrière (vu dans la direction d'avancement (A)). Dans ladite partie avant, les fourches (13) ramassent le fourrage se trouvant sur le sol. Ensuite, elles le déposent sous la forme d'un andain contre le déflecteur (29), en raison de leur pivotement vers le haut.

Dans la position de travail, les deux parties latérales (19 et 20) du dispositif de protection (16) sont sensiblement horizontales. Le verrou (31) se situe alors à environ un centimètre au-dessus de l'arrêt (34). Au cas où une personne voulait replier une des parties latérales (19 et 20) autour de son axe d'articulation (21 ou 22), la patte (43 ou 44) correspondante déplacerait automatiquement la traverse (39) et le verrou (31) vers le bas. Celui-ci viendrait rapidement buter contre l'arrêt (34) du fait que, en raison de la rotation de cet arrêt (34), il ne pourrait pénétrer dans aucun de ses orifices (36). En conséquence, ladite partie latérale (19 ou 20) serait bloquée dans une position où elle assurerait encore sa fonction de protection.

Si un utilisateur souhaite mettre l'andaineuse en position de transport, il doit impérativement arrêter la rotation de la roue râteleuse (2). Il peut alors tourner manuellement cette dernière jusqu'à ce qu'un orifice (36) se situe sous le verrou (31). Dès lors, il est possible de replier les parties latérales (19 et 20) du dispositif de protection (16) vers le haut, tel que représenté sur la figure 3, pour réduire la largeur de ce dispositif (16) et dégager l'accès à la roue râteleuse (2). Durant ce repliement les pattes (43 et 44) déplacent la traverse (39) vers le bas. Celle-ci pousse le verrou (31) dans un orifice (36) de l'arrêt (34), de telle sorte qu'il immobilise la roue râteleuse (2). Cette dernière ne présente plus aucun danger pour les personnes ou les animaux qui pourraient s'en approcher. Au cas où l'arbre de prise de force du tracteur venait à être mis en rotation, par exemple suite à une fausse manoeuvre, la roue râteleuse (2) resterait tout de même bloquée. Il est avantageux de prévoir un limiteur de couple tel qu'un accouplement à friction, entre les arbres de transmission qui entraînent la roue râteleuse (2), afin de protéger le pignon et la couronne d'entraînement lors d'une telle manoeuvre. Dans cette position, l'utilisateur peut facilement démonter les parties extérieures (12) des bras porte-outils (11) afin de réduire le diamètre de la roue râteleuse (2).

Inversement, pour transposer la roue râteleuse (2) dans la position de travail, il faut tout d'abord remonter les parties extérieures (12) des bras porte-outils (11). Ensuite, les deux parties latérales (19 et 20) du dispositif de protection (16) doivent être ramenées dans la position horizontale dans laquelle elles entourent la roue râteleuse (2). La traverse (39) est simultanément déplacée vers le haut par les pattes (43 et 44), laquelle traverse (39) entraîne le verrou (31) et le retire de l'orifice (36) de l'arrêt (34). Dès lors, la roue râteleuse (2) est libérée et elle peut à nouveau être entraînée en rotation.

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans sortir pour autant du domaine de protection tel que défini dans les revendications.

## Revendications

1. Machine agricole, notamment une andaineuse de fourrage, comportant une structure portant au moins une roue râteleuse qui est entraînée en rotation durant le travail autour d'un axe sensiblement vertical et un dispositif de protection qui entoure partiellement ou totalement ladite roue râteleuse, lequel dispositif de protection comporte au moins une partie latérale repliable, à laquelle est relié un verrou servant à immobiliser la roue râteleuse durant le transport, caractérisée par le fait que la roue râteleuse (2) comporte un arrêt (34) qui bloque le verrou (31) et la ou les parties latérales (19 et 20) du dispositif de protection (16) en position de travail tant qu'elle est entraînée en rotation.

2. Machine selon la revendication 1, caractérisée par le fait que l'arrêt (34) est constitué par une couronne (35) qui est solidaire de la roue râteleuse (2) et qui est située sous le verrou (31).

3. Machine selon la revendication 2, caractérisée par le fait que la couronne (35) comporte des orifices (36) dans lesquels peut s'engager le verrou (31) et dont le diamètre n'est que légèrement supérieur à celui dudit verrou (31).

4. Machine selon l'une quelconque des revendications précédentes, caractérisée par le fait que le verrou (31) est constitué par une broche (32) sensiblement verticale.

5. Machine selon la revendication 4, caractérisée par le fait que le verrou (31) est logé dans un tube (33) solidaire d'une barre (18) fixée à la structure (1).

6. Machine selon la revendication 5, caractérisée par le fait que le verrou (31) est lié à une traverse (39) qui s'étend entre les parties latérales (19 et 20) du dispositif de protection (16) et est déplaçable en hauteur au moyen de cette traverse (39).

7. Machine selon la revendication 6, caractérisée par le fait que la traverse (39) est fixée à ses extrémités sur des pivots (41 et 42) qui se situent sur des pattes (43 et 44) solidaires des axes d'articulation (21 et 22) des parties latérales (19 et 20) du dispositif de protection (16).

8. Machine selon la revendication 7, caractérisée par le fait que les pivots (41 et 42) sont décalés par rapport aux axes d'articulation (21 et 22) des parties latérales (19 et 20) du dispositif de protection (16).

9. Machine selon la revendication 8, caractérisée par le fait que les pivots (41 et 42) sont situés sur des droites (D et D') qui sont dirigées obliquement vers le haut et vers le milieu de la machine lorsque les parties latérales (19 et 20) du dispositif de protection (16) sont en position de travail.

10. Machine selon la revendication 9, caractérisée par le fait que lorsque les parties latérales (19 et 20) du dispositif de protection (16) sont en position de travail, les droites (D et D') forment des angles (α et α') d'environ 45° avec une ligne horizontale (L) passant par les axes d'articulation (21 et 22) desdites parties latérales (19 et 20).

11. Machine selon la revendication 7, caractérisée par le fait que la traverse (39) comporte à ses extrémités des orifices (45 et 46) oblongs dans la direction horizontale, dans lesquels se situent les pivots (41 et 42).

## Claims

1. Agricultural machine especially a fodder windrower, comprising a structure carrying at least one raking wheel which is driven in rotation during work about a substantially vertical axis, and a protecting device which partially or completely surrounds the said raking wheel, which protecting device has at least one foldable lateral part to which is attached a bolt which immobilizes the raking wheel during transport, ***characterized in*** that the raking wheel (2) has a stop (34) that locks the bolt (31) and the lateral part or parts (19 and 20) of the protecting device (16) in the work position while this wheel is driven in rotation.

2. Machine according to Claim 1, ***characterized in*** that the stop (34) consists of a ring (35) which is rigidly fastened to the raking wheel (2) and is located beneath the bolt (31).

3. Machine according to Claim 2, ***characterized in*** that the ring (35) has holes (36) in which the bolt (31) can engage and the diameter of which is only slightly greater than that of the said bolt (31).

4. Machine according to any one of the preceding claims, ***characterized in*** that the bolt (31) consists of a substantially vertical pin (32).

5. Machine according to Claim 4, ***characterized in*** that the bolt (31) is housed in a tube (33) which is rigidly fastened to a bar (18) fixed to the structure (1).

6. Machine according to Claim 5, ***characterized in*** that the bolt (31) is connected to a cross member (39) which extends between the lateral parts (19 and 20) of the protecting device (16) and can be moved heightwise by means of this cross member (39).

7. Machine according to Claim 6, ***characterized in*** that the cross member (39) is fixed at its ends to pivots (41 and 42) which are located on lugs (43 and 44) which are rigidly fastened to the axes of articulation (21 and 22) of the lateral parts (19 and 20) of the protecting device (16).

8. Machine according to Claim 7, ***characterized in*** that the pivots (41 and 42) are offset with respect to the axes of articulation (21 and 22) of the lateral parts (19 and 20) of the protecting device (16).

9. Machine according to Claim 8, ***characterized in*** that the pivots (41 and 42) lie on straight lines (D and D') which are directed obliquely upwards and towards the middle of the machine when the lateral parts (19 and 20) of the protecting device (16) are in the work position.

10. Machine according to Claim 9, ***characterized in*** that when the lateral parts (19 and 20) of the protecting device (16) are in the work position, the straight lines (D and D') form angles (α and α') of approximately 45° with a horizontal line (L) passing through the axes of articulation (21 and 22) of the the said lateral parts (19 and 20).

11. Machine according to Claim 7, ***characterized in*** that the cross member (39) has at its ends, holes (45 and 46) which are oblong in the horizontal direction and in which the pivots (41 and 42) are housed.

## Patentansprüche

1. Landmaschine, insbesondere einen Futterschwader, mit einem Gestell, das mindestens ein Rechrad trägt, das im Betrieb um eine im wesentlichen vertikale Achse drehangetrieben wird, und einer Schutzvorrichtung, die das Rechrad teilweise oder vollständig umgibt, wobei die Schutzvorrichtung mindestens einen klappbaren Seitenteil aufweist, mit dem ein Riegel verbunden ist, der dazu dient, das Rechrad beim Transport zu verriegeln, ***dadurch gekennzeichnet,*** daß das Rechrad (2) ein Halteglied (34) aufweist, das den Riegel (31) und den oder die Seitenteile (19 und 20) der Schutzvorrichtung (16) in Betriebsposition blockiert, solange das Rechrad drehangetrieben wird.

2. Maschine nach Anspruch 1, ***dadurch gekennzeichnet,*** daß das Halteglied (34) aus einem Ring (35) besteht, der fest mit dem Rechrad (2) verbunden ist und sich unter dem Riegel (31) befindet.

3. Maschine nach Anspruch 2, ***dadurch gekennzeichnet,*** daß der Ring (35) Öffnungen (36) aufweist, in die der Riegel (31) eingreifen kann und deren Durchmesser nur etwas größer ist als der des Riegels (31).

4. Maschine nach irgend einem der vorhergehenden Ansprüche, ***dadurch gekennzeichnet,*** daß der Riegel (31) aus einem im wesentlichen vertikalen Zapfen (32) besteht.

5. Maschine nach Anspruch 4, ***dadurch gekennzeichnet,*** daß der Riegel (31) in einem Rohr (33) untergebracht ist, das fest mit einem am Gestell (1) befestigten Stab (18) verbunden ist.

6. Maschine nach Anspruch 5, ***dadurch gekennzeichnet,*** daß der Riegel (31) mit einem Querträger (39) verbunden ist, der sich zwischen den Seitenteilen (19 und 20) der Schutzvorrichtung (16) erstreckt, und mittels dieses Querträgers (39) in der Höhe verschiebbar ist.

7. Maschine nach Anspruch 6, ***dadurch gekennzeichnet,*** daß der Querträger (39) an seinen Enden an Drehzapfen (41 und 42) befestigt ist, die sich an fest mit den Gelenkachsen (21 und 22) der Seitenteile (19 und 20) der Schutzvorrichtung (16) verbundenen Lappen (43 und 44) befinden.

8. Maschine nach Anspruch 7, ***dadurch gekennzeichnet,*** daß die Drehzapfen (41 und 42) bezüglich der Gelenkachsen (21 und 22) der Seitenteile (19 und 20) der Schutzvorrichtung (16) versetzt sind.

9. Maschine nach Anspruch 8, ***dadurch gekennzeichnet,*** daß sich die Drehzapfen (41 und 42) auf Geraden (D und D') befinden, die schräg nach oben und zur Mitte der Maschine ausgerichtet sind, wenn sich die Seitenteile (19 und 20) der Schutzvorrichtung (16) in Betriebsposition befinden.

10. Maschine nach Anspruch 9, ***dadurch gekennzeichnet,*** daß die Geraden (D und D') mit einer die Gelenkachsen (21 und 22) der Seitenteile (19 und 20) durchquerenden horizontalen Linie (L) Winkel (α und α') von ca. 45° bilden wenn sich die Seitenteile (19 und 20) der Schutzvorrichtung (16) in Betriebsposition befinden.

11. Maschine nach Anspruch 7, ***dadurch gekennzeichnet,*** daß der Querträger (39) an seinen Enden in Horizontalrichtung längliche Öffnungen (45 und 46) aufweist, in denen sich die Drehzapfen (41 und 42) befinden.
